# EUROPEAN PATENT APPLICATION

(11) **EP 3 241 871 A1**
(43) Date of publication of application: **08.11.2017**
(21) Application number: 16305515.5
(22) Date of filing: 03.05.2016
(51) Int. Cl.: C08L 95/00, B65D 88/74, E04H 7/00

(54) **USE OF HEAT-ABLE CLOSED CONTAINER TO HEAT AND STORE HEATED BITUMEN BEFORE AND DURING USE**

(71) Applicant: Total Marketing Services, 92800 Puteaux (FR)
(72) Inventor: SCHROEDER, Sönke, 25524 Itzehoe (DE)
(74) Representative: Lavoix

(57) **Abstract**

The present invention relates to the use of a heat-able closed container to heat and store heated bitumen composition up to a temperature of 230°C at workplace before and during its use.

## Description

The present invention relates to bitumen composition and more preferably to the use of a new device for the storage and the heating of bitumen composition at workplace before and during use. The invention relates preferably to industrial bitumen composition.

Bitumen is a non-volatile, adhesive and waterproofing material derived from petroleum. In the case of bitumen composition used for road and industrial applications, said composition is generally solid at ambient temperature and thus requires to be heated for use at workplace. However, the heating of bitumen generates fumes. Even if bitumen compositions are not considered harmful to the public, the exposure to high concentrations when handling hot bitumen can cause irritation of the eyes or lead to respiratory problems.

The presence, in bitumen composition, of small amount of polycyclic aromatic hydrocarbon in which some molecules are considered carcinogenic raises some questions regarding the potential effect on the health of workers exposed to bitumen or to bitumen fumes.

In the case of industrial application, the bitumen should be heated at a temperature up to 260-280°C. At this temperature, it has been shown that fumes are qualified as a sign of the cracking of bitumen, which implies a change of the bitumen's composition and thus of its properties and its performance qualities. Further, among industrial bitumen composition, there is oxidized bitumen composition, which is produced by passing air through a bitumen feedstock. The main uses for oxidized bitumen composition in the fields of industrial applications are for example for roofing insulation, electrical insulation, etc.

Moreover in the fields of industrial applications, oxidized bitumen, due to the potential effect on workers' health, is no longer used in a lot of countries, for example in France.

Usually for bitumen composition used in the field of industrial applications and sometimes in the field of road applications, the standard melting unit allows heating bitumen composition through a direct flame. Such a unit generates a very high surface temperature and leads to some cracked molecules and a lot of fumes and aerosol.

There is thus a need to provide a solution to avoid the generation of fumes and aerosol which have potential bad effect on workers' health.

There is further a need to provide a solution to avoid the generation of fumes and aerosol which have potential bad effect on workers' health while preserving the properties and performance qualities of heated bitumen.

One objective of the present invention is to provide new use of devices for the storage and the heating of bitumen compositions at workplace before and during their use to limit the liberation of fumes.

Another objective of the present invention is to provide a solution to protect the workers' health exposed to bitumen composition, especially industrial bitumen, more particularly oxidized bitumen, and their fumes.

Another objective of the present invention is to provide new use of devices for the storage and the heating of bitumen compositions at workplace before and during their use to preserve properties and performance qualities of heated bitumen.

Another objective of the present invention is to provide a new process for the storage and the heating of bitumen composition at workplace before and during their use, especially industrial bitumen, more particularly oxidized bitumen.

Other objectives of the invention are also described more in details on the below description of the invention.

All the drawbacks are overcome by the present invention which relates to the use of a heat-able closed container to heat and store heated bitumen composition up to a temperature of 230°C, preferably of 200°C, at workplace before and during its use.

Currently, bitumen composition, in the area of industrial uses and sometimes in the area of road uses, is stored and heated in a gas heated melting unit which is heated between 240 and 280°C, more preferably between 260 and 280°C, and which is open leading to the formation of a lot of fumes around the melting unit.

The heat-able closed container used in the present invention is any closed container that can be heated up to a temperature of at most 230°C, preferably of 200°C. The heat-able container is preferably an electrical heat-able container, preferably stainless steel container.

The use of a stainless steel container is particularly preferred because it allows reducing the contamination of bitumen heated and stored within the container with the corrosion of rust.

The container according to the invention is thus equipped with means to heat its content up to a temperature of at most 230°C, preferably of 200°C. Preferably, the temperature of the container's content is controlled to not exceed 230°C, preferably the temperature is controlled to be of 200°C. Accordingly, the container is equipped with means for controlling temperature of its content. The temperature can be controlled for example with a system comprising an alarm to warn the operator of a possible brutal increase of the temperature. For example, the temperature controller can be Temperature controller ELTC-14® sold from Eltherm.

Advantageously, the use of a closed container according to the invention, more particularly the combination of using a closed container with means for controlling its temperature, enables to heat the bitumen composition at a lower temperature than the device commonly used, generally at most 230°C and preferably of 200°C. The use of a closed container also enables improved workers' safety at workplace notably by avoiding generation of fumes. The use of a closed container according to the invention, more particularly the combination of using a closed container with means for controlling its temperature, further enables preserving the properties and the performance qualities of the bitumen during the heating.

This enables to save energy, time and also to deliver bitumen with good properties and performance qualities required for the industrial and road fields.

Preferably, the heat-able closed container of the invention is a heat-able intermediate bulk container (IBC).

IBC are well known and are described for example in EP2765083 and EP1531131. All IBC equipped with a heated system can be used in the present invention. Preferably, the IBC used in the present invention is stainless steel IBC. Generally, the IBC is composed of a frame with legs and thereon a stable support, such as a container, which is thus higher off the ground. The IBC used in the present invention is equipped with electrical heating means enabling to heat the content of the IBC preferably up to a temperature of 230°C, preferably of 200°C. As mentioned above, the IBC can be equipped with means allowing the control of the temperature of its content.

The heat-able closed container or IBC of the present invention is preferably provided with a spout allowing an easy recovery of heated bitumen composition, which is further applied at workplace.

For example, the heat-able closed container or IBC of the present invention allows recovering between 800 and 1000 kg of heated bitumen.

In one specific embodiment, bitumen composition heated with the container according to the invention is used for road applications, for example for the manufacture of surface dressings, hot bituminous mixes, cold bituminous mixes, cold poured bituminous mixes, emulsion-gravel mixtures, base courses, binder courses, bonding courses and surfacing, and other combinations of a bituminous binder and highway aggregate having particular properties, such as anti-rut courses, bituminous mixes for drainage or asphalts (mixture of a bituminous binder with aggregates of the sand type).

More particularly, in the case of road applications, the bitumen mixes or bituminous mixes comprise a bitumen composition heated with the container according to the invention and aggregates and mineral and/or synthetic fillers.

In one specific embodiment, bitumen composition heated with the container according to the invention is used for industrial applications, for example for the manufacture of sealing membranes, anti-noise membranes, isolating membranes, surface coverings, carpet slabs, prime coats.

For example, the industrial heated bitumen composition is poured into a pouring device, for example a watering can type device. Then the worker applies said industrial heated bitumen composition with the pouring device, preferably the watering can type device, at workplace.

For example, sealing membrane can be composed of three layers: a first bitumen layer, a second copper layer and a third bitumen layer. In this case, the worker applies at workplace, a layer of industrial heated bitumen composition with the pouring device, preferably the watering can type device, then applies onto bitumen's layer, a copper layer, and finally applies a second layer of industrial heated bitumen composition with the pouring device, preferably the watering can type device, to cover the copper's layer.

The inventors have compared the heating and the pouring with a pouring device, preferably a watering can type device, of industrial heated bitumen composition recovering from a closed contained or IBC (the present invention) and recovering from the gas heated melting unit (prior art) for the production of sealing membrane such as the one disclosed above.

Surprisingly, they have found that there are no fumes leaking inside and outside the pouring device, preferably the watering can type device, when bitumen composition is heated with the closed container or IBC according to the invention contrary to the bitumen composition heated with the gas heated melting unit commonly found in prior art.

The inventors have thus surprisingly found that the use of a closed container or IBC enables not only to avoid generation of fumes during the storage and the heating of bitumen but also to avoid generation of fumes from heated bitumen in the pouring device, preferably the watering can type device, during its pouring.

Advantageously, in the present invention the heat-able closed container used to heat and store heated bitumen composition, is used to avoid or limit the generation of fumes during the storage and the heating of the bitumen composition in the container and during its use by the workers at workplace while preserving properties and performance qualities of heated bitumen.

The present invention can be implemented with all type of bitumen composition, especially bitumen composition for industrial and road applications.

Bitumen used in the invention include firstly the bitumen of natural origin, those contained in natural deposits of bitumen, natural asphalt or tar sands and bitumen from the refining of crude oil. Bitumen according to the invention is advantageously chosen from the bitumen from the refining of crude oil. Bitumen may be selected from the bitumen bases or bitumen mixture of bases from the refining of crude oil, particularly bitumen bases containing asphaltenes. Bitumen bases may be obtained by conventional methods of manufacturing bitumen refinery, in particular by direct distillation and/or vacuum distillation of oil. The bitumen may be optionally visbroken and/or deasphalted and/or air rectified. The different bitumen obtained by the refining processes can be combined to achieve the best technical compromise. Bitumen may also be bitumen recycling. Bitumen may also be oxidized bitumen.
Bitumen can be bitumen of hard or soft grade. Bitumen according to the invention has a penetrability, measured at 25 ° C according to EN 1426, of between 5 and 300 1/10 mm, preferably between 10 and 100 1/10 mm, more preferably between 30 and 100 1 / 10 mm.

In an embodiment, bitumen composition comprises at least one bitumen base.

In a specific embodiment, industrial bitumen composition comprises at least one oxidized bitumen base.

In another embodiment, bitumen composition comprises:
- at least one bitumen base,
- between 0.1% and 5% by weight, preferably between 0.5 and 4% by weight, more preferably between 0.5% and 2.5% by weight of an acid additive.

The weight percentages are based on the total weight of the bituminous composition.

According to the invention, the acid additive has the general formula (I):

R- (COOH)_{z} (I)

wherein R is a linear or branched hydrocarbon chain, saturated or unsaturated containing from 4 to 68 carbon atoms, preferably 4 to 54 carbon atoms, more preferably from 4 to 36 carbon atoms and z an integer ranging from 1 to 4, preferably 2 to 4, more preferably equal to 2.

Acids additives having the formula (I) may advantageously be diacid (z = 2), triacid (z = 3) or tetracid (z = 4). Preferred acids additives are acids with z = 2. Similarly, the group R is preferably a linear and saturated hydrocarbon chain of formula C_{w}H_{2w} with w is an integer ranging from 4 to 22, preferably 4 to 12. Acids additives have, in particular, the general formula HOOC-C_{w}H_{2w}-COOH wherein w is an integer ranging from 4 to 22, preferably 4 to 12. These acids additives correspond to formula (I) above wherein z = 2 and R = C_{w}H_{2w}.

Preferred diacids are:
- Adipic acid or 1,6-hexanedioic with w = 4
- Pimelic acid or 1, 7-heptanedioic with w = 5
- Suberic acid or 1,8-octanedioic acid with w = 6
- Azelaic acid or acid 1, 9-nonanedioic with w = 7
- Sebacic acid or 1,10-decanedioic acid with w = 8
- Undecanedioic acid with w = 9
- 1, 2-dodecanedioic acid with w = 10
- Tetradecanedioic acid with w = 12

The diacids may also be diacid dimer(s) of unsaturated fatty acid(s) that is to say of dimers formed from at least one unsaturated fatty acid, for example from a single fatty acid unsaturated or from two different unsaturated fatty acids. Dimers diacid(s) of unsaturated fatty acid(s) are conventionally obtained by intermolecular dimerization reaction of at least one unsaturated fatty acid (Diels Alder reaction for example). Preferably, there is only one type of unsaturated fatty acid which is dimerized. They are derived in particular from the dimerization of an unsaturated fatty acid, in particular C₈ to C₃₄, especially C₁₂ to C₂₂, particularly C₁₆ to C₂₀, and most particularly C₁₈. A preferred fatty acid dimer is obtained by dimerization of linoleic acid, the latter then may be partially or fully hydrogenated. Another preferred fatty acid dimer has the formula HOOC-(CH₂)₇-CH = CH-(CH₂)₇-COOH. Another preferred fatty acid dimer is obtained by dimerization of methyl linoleate.

Similarly, one can find tricarboxylic fatty acids and tetracarboxylic fatty acids respectively obtained by the trimerization and tetramerization of at least one fatty acid.

According to another particular embodiment, the bitumen composition comprises:
- at least one bitumen base,
- 0, 1% and 5% by weight, preferably between 0.5 and 4% by weight, more preferably between 0.5% and 2.5% by weight of an acid additive,
- and from 0.05% to 15% by weight, preferably between 0, 1 and 10% by mass, more preferably between 0.5% and 6% by weight of an olefinic polymer adjuvant.

According to this particular embodiment, the bitumen composition thus comprises 80% to 99%, preferably 85% bitumen base as described above.

Bitumen base and the acid additive are as described above.

The olefinic polymer adjuvant is selected preferably from the group consisting of (a) ethylene / glycidyl (meth)acrylate; (b) ethylene/monomer A/monomer B and (c) copolymers resulting from the grafting of a monomer B on a polymer substrate.
(a) The ethylene / glycidyl (meth) acrylate is advantageously chosen from random or block copolymers, preferably statistics, ethylene and a monomer selected from glycidyl acrylate and glycidyl methacrylate, comprising from 50% to 99.7% by weight, preferably from 60% to 95% by mass, more preferably 60% to 90% by weight of ethylene.
(b) The terpolymers are advantageously chosen from random or block terpolymers, preferably statistics, ethylene, a monomer A and a monomer B.
   The monomer A is selected from vinyl acetate and (C₁-C₆)-alkyl acrylates or methacrylates.
   The monomer B is selected from glycidyl acrylate and glycidyl methacrylate.
   The terpolymers ethylene/monomer A/monomer B comprise 0.5% to 40% by weight, preferably from 5 to 35% by mass, more preferably from 10% to 30% by weight of units derived from monomer A and from 0.5% to 15% by weight, preferably from 2.5% to 15% by weight of units derived from monomer B, the rest being formed by units derived from ethylene.
(c) The copolymers resulting from the grafting of a monomer B selected from glycidyl acrylate and glycidyl methacrylate, on a polymer substrate. The polymer substrate comprises a polymer selected from polyethylenes, especially low-density polyethylenes, polypropylenes, random or block copolymers, preferably statistics, and ethylene vinyl acetate and the random or block copolymer, preferably statistics , ethylene and (C₁-C₆)-alkylacrylate or methacrylate, comprising from 40% to 99.7% by weight, preferably from 50% to 99% by weight of ethylene.

Said graft copolymers comprise from 0.5% to 15% by weight, preferably from 2.5% to 15%) by weight of grafted units resulting from the monomer B.

The olefinic polymer adjuvant is preferably selected from terpolymers (b) ethylene/ monomer A /monomer B described above.

Advantageously, the olefinic polymer adjuvant is selected from random terpolymers of ethylene, a monomer A chosen from (C₁-C₆)-alkylacrylates or methacrylates and a monomer B selected from glycidyl acrylate and glycidyl methacrylate, comprising 0.5% to 40% by weight, preferably from 5 to 35% by mass, more preferably from 10% to 30% by weight of units derived from monomer A and 0.5% to 15% by weight, preferably from 2.5% to 15% by weight of units derived from monomer B, the rest being formed by units derived from ethylene.

According to a particular embodiment, the bitumen composition comprises from 0.05% to 15% by weight, preferably 0.1 to 10% by mass, more preferably from 0.5 to 6% by weight of the olefinic polymer adjuvant relative to the total weight of said composition. The amounts of the acid additive and optionally olefinic polymer adjuvant are adjusted depending on the nature of the bitumen used.

In particular, the referred penetrability is preferably between 20 and 45 1/10mm and the referred ring and ball softening temperature (RBT) is preferably greater than 90°C, provided that the penetrability is measured at 25°C according to EN 1426 and the RBT is measured according to EN 1427.

The bituminous composition as described above can also contain other known additives or other elastomers to bitumen known as SB copolymers (block copolymer of styrene and butadiene), SBS (styrene-butadiene block copolymer styrene), SIS (styrene-isoprene-styrene), SBS * (block copolymer styrene-butadiene-styrene star), SBR (styrene-b-butadiene-rubber), EPDM (ethylene propylene diene modified). These elastomers may also be crosslinked by any known process, for example with sulfur.

According to a particular embodiment, the bitumen composition as described above is preferably packaged under the form of block or in bags made of heat fusible material or in thermofusible material buckets. It is mean by "bitumen under the form of block", rectangular blocks, preferably paved bitumen, having a volume of between 10 000 and 30 000 cm³, preferably between 14000 and 20000 cm³ and/or a mass between 10 and 30 kg, preferably between 14 and 20 kg.

Advantageously, the bitumen composition as described above is preferably packaged in the form of block or in bags or thermofusible material buckets. These blocks of bitumen are advantageously wrapped within a thermoplastic film or contained in a carton having inner face of wall in silicone. The bitumen composition packaged in block with a thermoplastic film or, in bags or in thermofusible material buckets has the advantage of being ready for use that is to say, it can be directly heated in an IBC according to the invention without unpacking.

The hot melt material which melts with the bituminous composition does not affect the properties of said composition.

In a specific embodiment, the industrial bitumen compositions disclosed in WO 2015/158889 are herein incorporated by reference.

In a specific embodiment, the industrial bitumen compositions formed of a mixture of bitumen and thermoplastic elastomer SBS, SIS or EVA and disclosed in EP 1 350 900 are also herein incorporated by reference.

A commercially available industrial product sold under the name SOPREMA EAC NEO corresponding to a bitumen modified based on SEBS (polystyrene-b-poly (ethylenebutylene) -b-polystyrene) used for hot gluing of thermal insulation or sealing roofing sheets could also be used as industrial bitumen composition according to this invention.

The present invention also relates to a process for applying bitumen composition, especially industrial bitumen composition, in the area of use or at workplace. This process comprising:
1) heating bitumen composition, preferably industrial bitumen, and storing the heated bitumen composition into an heat-able closed container;
2) loading a pouring device, such as a watering can type device, with the heated bitumen composition of step 1); and
3) applying the composition with the pouring device, such as the watering can type device, in the area of use or at workplace.

The heat-able closed contained is as disclosed above and is preferably a heat-able IBC, preferably an electrical heat-able IBC. Preferably in step 1), the heating is implemented up to a temperature of 230°C, preferably of 200°C. Preferably, the heated bitumen composition is at a temperature up to 230°C, preferably at a temperature of 200°C.

The inventors surprisingly show that the implementation of this process may not generate fumes leaking from the bitumen composition being in the device compared to actual prior art process.

The present invention also relates to the use of a heat-able closed container to protect workers from the bitumen fumes during the storage, the heating and the use of bitumen composition at workplace while preserving the properties and performance qualities of the heated bitumen.

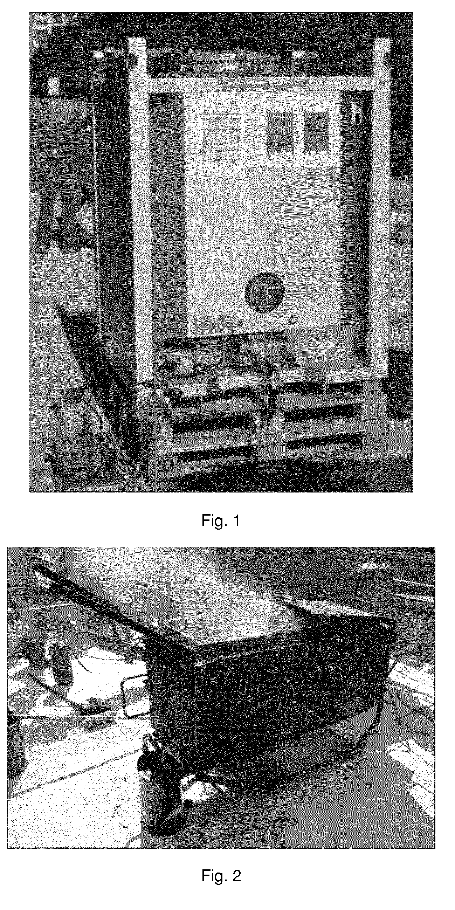

Figure 1 shows the heating of bitumen composition in a heat-able closed container according to the invention. Figure 1 shows that no fumes are generated.
Figure 2 shows the heating of bitumen composition in a gas heated melting unit (comparative example). Figure 2 shows the generation of fumes inside and outside the gas heated melting unit.

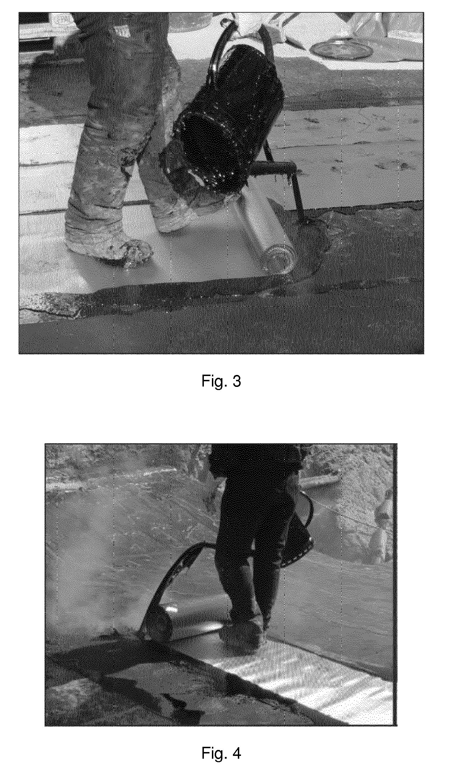

Figure 3 shows the pouring of bitumen composition recovering from the closed container of figure 1. Figure 3 shows that no fumes are generated.
Figure 4 shows the pouring of bitumen composition recovering from the gas heated melting unit of figure 2 (comparative example). Figure 4 shows that a lot of fumes are generated.

## Claims

1. Use of a heat-able closed container to heat and store heated bitumen composition up to a temperature of 230°C, preferably at a temperature of 200°C.

2. Use according to claim 1, wherein the heat-able closed container is an electrical heat-able closed container.

3. Use according to claim 1 or 2, wherein the temperature of the heated bitumen composition within the closed container is controlled to not exceed 230°C, preferably the temperature is controlled to be of 200°C.

4. Use according to anyone claims 1 to 3, wherein the bitumen composition comprises at least one bitumen base.

5. Use according to anyone claims 1 to 4, wherein the bitumen composition comprises:
- at least one bitumen base,
- between 0.1% and 5% by weight, preferably between 0.5 and 4% by weight, more preferably between 0.5% and 2.5% by weight of an acid additive.

6. Use according to claim 5, wherein the acid additive has the general formula (I):
R- (COOH)_{z} (I)
wherein R is a linear or branched hydrocarbon chain, saturated or unsaturated containing from 4 to 68 carbon atoms, preferably 4 to 54 carbon atoms, more preferably from 4 to 36 carbon atoms and z an integer ranging from 1 to 4, preferably 2 to 4, more preferably equal to 2.

7. Use according to anyone of claims 1 to 6, to avoid or limit the generation of fumes during the storage and the heating of the bitumen composition in the container and during its use by the workers at workplace.

8. Use according to anyone of claims 1 to 7, to protect workers from the bitumen fumes during the storage and the heating and the use of bitumen composition at workplace.

9. Use according to anyone of claims 1 to 8, to preserve the properties and the performance qualities of the heated bitumen.

10. Use according to anyone of claims 1 to 9, for industrial applications.

11. Use according to anyone of claims 1 to 9, for road applications.

12. Process for applying bitumen composition, in the area of use or at workplace comprising:
1) heating industrial bitumen composition, and storing the heated bitumen composition into an heat-able closed container;
2) loading a pouring device with the heated bitumen composition of step 1); and
3) applying the composition with the pouring device in the area of use or on workplace.
